# EUROPEAN PATENT APPLICATION

(11) **EP 1 315 353 A1**
(43) Date of publication of application: **28.05.2003**
(21) Application number: 01403017.5
(22) Date of filing: 23.11.2001
(51) Int. Cl.: H04L 29/06, H04L 12/46, H04L 12/28, H04L 12/40

(54) **Methods for establishing a connection between a first and a second device over a bridge connecting a HAVi-subnetwork to another sub-network**

(71) Applicant: Thomson Licensing S.A., 92100 Boulogne-Billancourt (FR)
(72) Inventor: Henry, Jean-Baptiste, 35520 Melesse (FR); Bichot, Guillaume, 35630 La Chapelle Chaussee (FR)
(74) Representative: Kohrs, Martin

(57) **Abstract**

The invention concerns methods for establishing a connection between a first and a second device in a network comprising a bridge device (5) connecting a first sub-network (2) of the HAVi type to a second sub-network (4).
According to a first embodiment, the method is characterized in that it comprises the steps, at the level of a device control module (8, 20) of the first device hosted by the bridge device, of:
(a) receiving, from a HAVi stream manager (12), data permitting identification of a peer device control module of the second device;
(b) determining whether the device control module and the peer device control module are of the legacy type and have a same device identifier; and
(c) in the negative, deducing that the first (3) and second devices (1) are on different sub-networks (2, 4);
(d) in the affirmative, deducing that the first and second devices (3, 18) are on the second sub-network (4).

According to a second embodiment, the stream manager provides the device control modules with more direct information.
The invention also concerns a method seen from the point of view of the stream manager.

## Description

The invention concerns methods for establishing a connection between two devices which may be on the same or on different subnetworks, e.g. a UPnP and a HAVi network. It applies in particular to the field of domestic communication networks.

The bridge's functions include representing HAVi software elements (device control modules and functional component modules, for example) on the UPnP network, and representing UPnP devices and services on the HAVi network.
According to the HAVi specification, each device on a HAVi network has to possess a configuration memory, from which certain descriptive data can be read ('SDD' data for Self-Describing Data').
The proxy devices of the bridge representing the UPnP devices are not real-world devices, and thus do not have such a configuration memory.

The patent application WO 0076131 filed in the name of THOMSON multimedia on May 31, 2000 and published on December 14, 2000 concerns a device and method for bridging a HAVi (Home Audio/Video interoperability) network and a UPnP (Universal Plug and Play) network.
The European patent application EP01402205.7 filed on August 22, 2001 in the name of Thomson Licensing SA also concerns a HAVi-UPnP bridge, where the representation of devices on each side of the bridge is slightly different from the above PCT application.
The present invention concerns an improvement of the invention described in the European patent application, in particular in the case when a device of one sub-network wishes to establish a connection between two devices connected to another sub-network.
Indeed, when e.g. an application of a HAVi device wishes to set up a connection between two UPnP devices on the UPnP sub-network, such a connection has to be set up directly between the two UPnP devices, and should not comprise a first connection between the source UPnP device and the bridge, followed by a second connection between the bridge and the sink UPnP device.

The invention concerns a method for establishing a connection between a first and a second device in a network comprising a bridge device connecting a first sub-network of the HAVi type to a second sub-network,
characterized in that it comprises the steps, at the level of a device control module of the first device hosted by the bridge device, of:
(a) receiving, from a HAVi stream manager, data permitting identification of a peer device control module of the second device;
(b) determining whether the device control module and the peer device control module are of the legacy type and have a same device identifier; and
(c) in the negative, deducing that the first and second devices are on different sub-networks;
(d) in the affirmative, deducing that the first and second devices are on the second sub-network.

According to a first embodiment of the invention, step (c) further comprises the steps of establishing a connection between the first device and the bridge device.

According to the first embodiment, step (d) further comprises the steps of establishing a connection between the first device and the second device on the second sub-network.

According to the first embodiment, the method further comprises, within step (d), the step of determining whether the device control module or the peer device control module is to carry out the connection of step (d).

According to the first embodiment, the connection of step (d) is established by the entity among the device control module or the peer device control module which represents a sink device of the connection.

According to the first embodiment, the second sub-network is of the UPnP type and wherein step (c) comprises:
- the step of instructing Connection Managers of the bridge device and the UPnP device represented by the device control module to prepare for connection;
- the step of setting up a connection on the UPnP sub-network between the bridge device and said UPnP device; and
- the step of configuring an internal connection of the bridge device to link the connection on the UPnP sub-network with a connection on the HAVi sub-network.

According to the first embodiment, the second sub-network is of the UPnP type and the step (d) comprises:
- the step of instructing Connection Managers of the UPnP devices represented by the device control module and the peer device control module to prepare for connection; and
- the step of establishing a connection on the UPnP sub-network of the two UPnP devices.
   According to the first embodiment, the data received from the stream manager comprises a SEID identifier of the peer device control module.
   Another object of the invention is a method for establishing a connection between a first and a second device by a HAVi Stream Manager, characterized in that it comprises the steps of:
   (a) determining identifiers of device control modules of the first and second devices;
   (b) inserting said identifiers into a message for instructing a device control module to perform internal connections.

   According to a first embodiment, the message is 'Dcm::Connect'.
   According to the first embodiment, the method further comprises the step of
- checking whether the device control modules are of the legacy type and have a same device identifier, and only in the negative reserving connection resources on the HAVi network.

According to a second embodiment, the method further comprises a step (c) of checking whether the device control modules are of the legacy type and have a same device identifier, and wherein, in the affirmative the message instructs the device control modules to establish a non-HAVi connection, and in the negative the message instructs the device control modules to establish a connection between a device on the HAVi network and a legacy device.

Another object of the invention is a method for establishing a connection between a first and a second device in a network comprising a bridge device connecting a first sub-network of the HAVi type to a second sub-network,
characterized in that it comprises the steps, at the level of a device control module of the first device hosted by the bridge device, of:
(a) receiving, from a HAVi stream manager, data indicating whether the first and second devices are on different sub-networks or whether the first and second devices are on the second sub-network; and
(b) configuring connections on the second sub-network and on the bridge device as a function of said data.

Other characteristics and advantages of the invention will appear through the description of a non-restrictive embodiment, explained with the help of the enclosed figures, among which:
Figure 1 is a block diagram of a network comprising a HAVi-UPnP bridge device.
Figure 2 is a block diagram of the network of figure 1 comprising a HAVi device but before connection of a UPnP device.
Figure 3 is a block diagram of the network of figure 4 during the announcement phase of a UPnP device.
Figure 4 is a block diagram of the network of figure 5 after creation of a DCM and of an FCM for the UPnP device.
Figure 5 is a flowchart of the processes carried out by a Stream Manager and a DCM according to a first embodiment of the invention.
Figure 6 is a block diagram of a network showing certain steps of the method according to the first embodiment in the case of establishment of a connection between two UPnP devices by a HAVi device.
Figure 7 is a block diagram of the network of figure 6 in the case a connection is established through the bridge device.

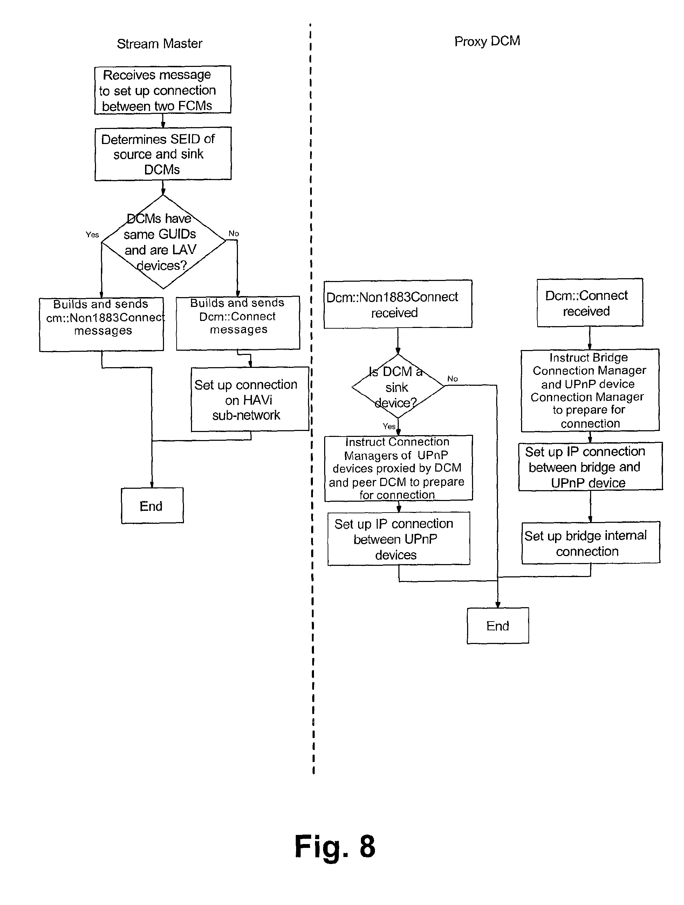

Figure 8 is flowchart of the processes carried out by a Stream Manager and a DCM according to a second embodiment of the invention.

According to the present embodiment, a bridge device links a HAVi network and a UPnP network. HAVi stands for 'Home Audio Video interoperability' and defines a software stack for controlling a home network, especially based on IEEE 1394 busses. The current version of the HAVi specification is v1.1, published May 15, 2001 and available from HAVi, Inc., 2694 Bishop Drive, Suite 275 San Ramon, CA 94583, USA. UPnP stands for 'Universal Plug and Play' and also provides a network control software stack, based on the Internet Protocol (IP). The UPnP specifications or draft specifications can be obtained from the UPnP forum managed by Microsoft Inc.

Be it in a HAVi network or a UPnP network, applications and other elements must be able to determine available functionalities.

In a HAVi network, a functionality is represented by a software element called FCM (Functional Control Module). Hierarchically speaking, a FCM is always contained in a DCM (Device Control Module), representing a device. A DCM can contain more than one FCM (for example a DCM representing a digital VCR contains a Tuner FCM and a VCR FCM). There is only one DCM for each device.
In a HAVi network, if a software element wants to offer its functionality to the network, it has to register itself with a local software element called the 'Registry'. When an FCM is created (it can be at device boot time or at run time- e.g. download of a DCM control unit or 'DCU'), it registers itself in the Registry of its own device.
When an application wants to know which services are available in the network, it sends a query to all Registries of the network.
Furthermore, a system of events exists for software elements created dynamically while the system is running. The Registry can make use of two events in order to announce the registration or removal of a software element: NewSoftwareElement (to indicate that a software element has just been registered) and GoneSoftwareElement (to indicate that a software element has just been unregistered). No polling is necessary in the HAVi network.

If a software element is newer than a HAVi Registry (i.e. the software element is of unknown type), it will still be recognized and shown as a new functionality on the HAVi network.

UPnP does not integrate a notion similar to the HAVI Registry. Nevertheless, in a UPnP network, services of devices may be announced on the network. For this purpose, UPnP uses 'HTTP over UDP for multicast' (HTTPMU). It is also possible for an application to search for a service on the network. The service discovery protocol is SSDP (Simple Service Discovery Protocol). It can be combined with the GENA protocol (General Event Notification Architecture) for event notification. When an application wants to know which services are available, it sends a SSDP discover multicast message. The services which match the request have to send back a response in unicast mode (HTTPU). The query can be very broad (e.g. all services) or more limited (e.g. a certain type of service).
When a service is new on the network, it has to send a GENA-SSDP 'alive' multicast message to announce its presence.
The alive message and the discover response message contain an age limit ('max-age') field. The maximum age field represents, in seconds, the validity of the service. If the service is still present after this time, another alive message must be sent by the service (or another discover query is made).
In UPnP networks, control is carried out using Simple Object Access Protocol (SOAP) messages.

The role of the bridge device is to connect both networks in such a way as to translate messages from one side to the other, in order to enable any device of one network to communicate with any device of the other network. The bridge should also be able to pass streams.

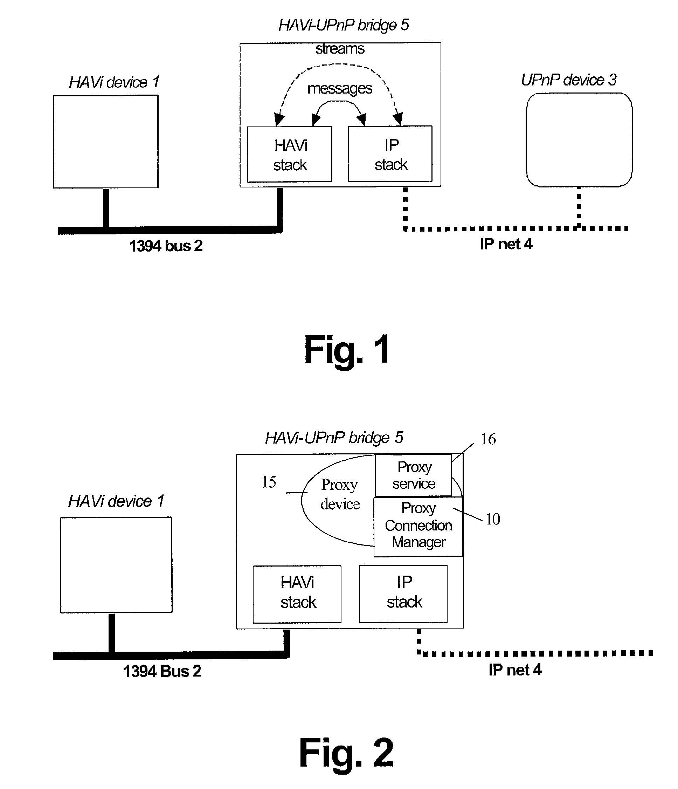

Figure 1 gives an example of a HAVi network comprising a HAVi device 1 connected to an IEEE 1394 bus 2, this HAVi network being connected to a UPnP network comprising a UPnP device 3 connected to an IP net 4, both networks being linked by a bridge device 5. The bridge 5 comprises a HAVi protocol stack, an IP protocol stack, as well as software for carrying out the translation or mapping of control messages, events, streams, ... from one network to the other.

As described in the European patent application cited in the introduction, a UPnP device is represented by a HAVi DCM, while a UPnP service is represented by a HAVi FCM within the DCM representing the UPnP device linked to the service. Conversely, a HAVi DCM is represented by a UPnP device and a HAVi FCM is represented by a service associated with the device representing the DCM containing this FCM. The software elements created by the bridge are called 'proxy' software elements in what follows.

It is the bridge's function to represent devices as appropriate on each network: for each DCM or FCM on the HAVi network, it will create a UPnP device or a UPnP service. Conversely, for each UPnP device, respectively service, the bridge creates a HAVi DCM, respectively FCM.
The bridge device is responsible for updating the representation of each network whenever a service, device, FCM or DCM is added or removed.

Depending on the configuration of each network, a bridge may manage several HAVi DCMs representing UPnP devices. It may also manage its own DCM, since the bridge device may itself have a function other than its bridge function. For example, the bridge function can be included in a device such as a television receiver or a satellite decoder.

According to the HAVi specification and in conformity with the EEE 1212 standard, each HAVi device - which is a IEEE 1394 device - comprises a configuration memory. HAVi and IEEE 1394-2000 define a number of parameters held in this memory. The parameters defined by HAVi are called self-describing data, or 'SDD', and may be read by another device. DCMs of the bridge representing UPnP devices do not represent real IEEE 1394 devices, and thus do not have a configuration memory conforming to HAVi/IEEE 1394 which could contain SDD data.
In order to avoid this issue, DCMs created by the bridge to represent UPnP devices are declared as legacy devices ('LAV' or Legacy Audio/Video devices). These devices, which may or may not be IEEE 1394 devices, are considered as not being HAVi compliant, and are thus not expected to contain SDD data. The nature of the DCM can be recognized by other software elements using a function of the DCM application programmable interface (API) called DCM::GetDeviceClass.

According to the HAVi specification, a DCM or FCM registers itself with its local Registry. During the registration, the DCM provides a certain amount of information, among others a data structure called TargetlD, which indicates whether the registering software element is a device (DCM), a functional component of a device (FCM) or an application module. In the first two cases, the TargetlD data structure also indicates whether the DCM or FCM is compliant with the IEC 61883 standard which among other things defines the transport of isochronous streams (e.g. audio and video streams) over a IEEE 1394 network. No two TargetlD data structures are to be the same.
The HAVi specification requires that the TargetlD structure contain a global unique identifier ('GUID') which is a 64-bit quantity identifying uniquely a IEEE 1394 device. This GUID identifier is stored in a device's configuration ROM and is persistent over network resets. Within the context of streaming, the GUID given in the target ID identifies the physical HAVi device to which the stream is to be sent or from which the stream is to be received. For certain device types, this may not be the host device of the DCM associated with the stream source or sink device but the final target device GUID.
DCMs representing UPnP devices do not have an own GUID identifier. However, as the bridge will also send to the HAVi network streams received from the UPnP network, or receive streams from HAVi devices to be passed on to UPnP devices, these DCMs representing UPnP devices have to use the bridge's GUID identifier in their TargetlD data structure.
Being in the home network environment, the bridge may typically be designed to send or receive and process audio and video streams, independently from its function as a bridge between the HAVi and the UPnP networks. It then has its own DCM, and this DCM will be of the type compliant with IEC 61883. During its registration, the DCM of the bridge itself will use its own GUID identifier.
In such a case, the device type of a DCM representing a UPnP device cannot be a DCM compliant with IEC 61883, because this would result of having two identical TargetlD data structures in the HAVi network. Even if the bridge's own DCM were not of the DCM_61883 type, the same problem occurs if the bridge is to handle more than two DCMs for UPnP devices.
DCMs of UPnP devices are declared as non-61883 DCMs. In this case, the TargetlD data structures of these DCMs still contain the bridge's GUID identifier (the bridge being the host of these DCMs), but the TargetlDs are distinguished by a further parameter, which is an identifier internally attributed to each DCM by the bridge.
The fact that the UPnP devices are shown as non-61883 devices on the HAVi side of the network does not mean that these devices may not send or receive streams, only that these streams are not necessarily compliant with IEC 61883.
In a similar fashion, proxy FCMs representing UPnP services are declared as non 61883 FCMs.

As mentioned, the HAVi specification defines five different values for the target software element type (DCM_61883, DCM_NON61883, FCM61883, FCM_NON61883 and AM). As a variant embodiment solving the above problem, additional target types are defined:
DCM_PROXY or DCM_NON1394- identifies a DCM as representing a UPnP device (or a device on another non-HAVi network)
FCM_PROXY or FCM_NON1394 - identifies an FCM as representing a UPnP service (or a service or functionality on another non-HAVi network)
On the UPnP side, such a problem does not exist, since the physical device is represented with a root device, which can contain several devices and services.
When it receives an event that a new proxy DCM or FCM has been created for a UPnP device or service, a HAVi application may want to obtain additional information regarding such a DCM or FCM. The reverse is also true, when a UPnP device or service is informed of a new proxy device or service handled by the bridge.
For this purpose, the bridge assembles information concerning each HAVi DCM or FCM or UPnP service or device for which it creates a proxy. This information is assembled before announcement of the creation of the proxy software element.
The bridge carries out the following steps:
(a) For a new HAVi software element, the bridge requests the element's attributes from the Registry (using the Registry::RetrieveAttributes function).
For a new UPnP software element, the bridge has received a description of the software element through the simple service discovery protocol 'alive' message mentioned earlier. This description is a universal resource locator (URL) written in XML, and is, according to the present embodiment, parsed by the bridge in order to extract all relevant information.
(b) The bridge creates the new proxy software element.
(c) The bridge sends an event to announce the availability of the proxy software element, using the 'NewSoftwareElement' event message on the HAVi network (for a proxy representing a UPnP software element) or by using a 'ssdp::alive' multicast message on the UPnP network (to announce a proxy for a HAVi software element). In conformity with UPnP, this multicast message is to be reiterated periodically.
The event mapping is given in Table 1:

**Table 1**

| **HAVi** | **UPnP** |
|---|---|
| NewSoftwareElement (Registry) This event gives the SEID of the new software element(s). The logical action after receiving such an event is a Registry::RetrieveAttributes on each SEID in order to have more information about the software element. | ssdp::alive This multicast message gives the type of the new entity and the URL for its complete description (written in XML). So the next logical action is a HTTP GET call on this URL. So there is one ssdp::alive message for each entity (root device, device, service) |
| GoneSoftwareElement (Registry) This event gives the SEID of the software elements which unregistered. | ssdp::byebye If the entity cannot send this message (plug off), the availability of the entity will end with the expiration of the ssdp::alive polling timer. |

### Dcm::Dcm::

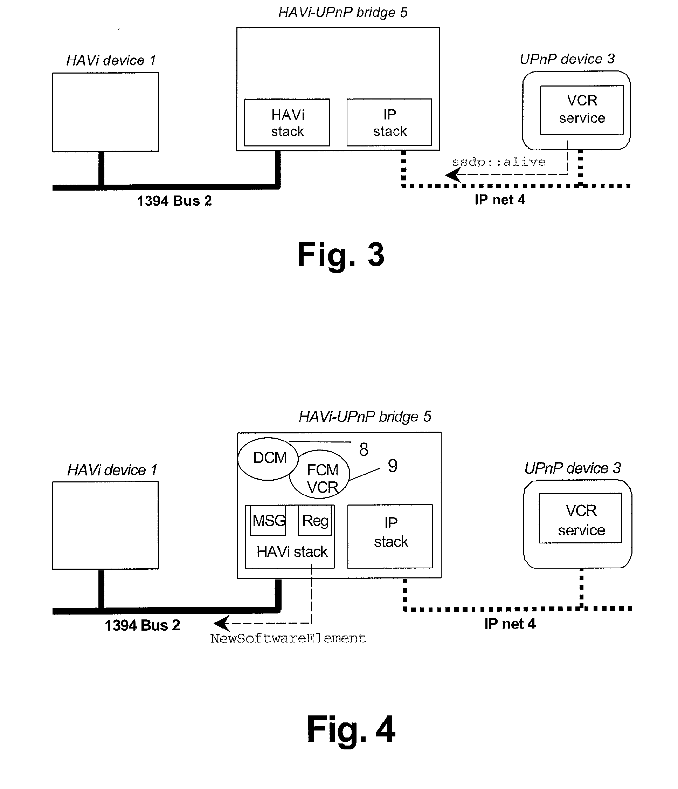

Figures 2 to 4 illustrate the process triggered at the bridge by connecting a UPnP device to the UPnP network. In the initial network of figure 2, only HAVi device 1 is connected to the HAVi network, and no device is connected to the IP network. The HAVi device is represented by the bridge to the UPnP network as a proxy device 15, comprising a proxy service 16 and a proxy Connection ManagerConnection Manager 10. For the clarity of the explanation, figures 3 to 5 do not show proxy software elements corresponding to the HAVi device on the UPnP side of the bridge, unless required for the explanation.

As illustrated by figure 3, a UPnP device 3, in this case a UPnP VCR, is connected to the IP network 4. The bridge 5 is notified of this connection via the SSDP protocol. The bridge then analyzes the XML description of the device and discovers that the newly connected device is a VCR device including a VCR service.
As illustrated by figure 4, the bridge creates a HAVi DCM 8 and a HAVi VCR FCM 9 as proxy software elements, in order to simulate the UPnP VCR device and service. The two new HAVi software elements then request a SEID identifier from the bridge's Messaging System ('MSG' in figure 4) and register with the bridge's Registry ('Reg'). This registration causes the Registry to send a NewSoftwareElement event over the HAVi network.

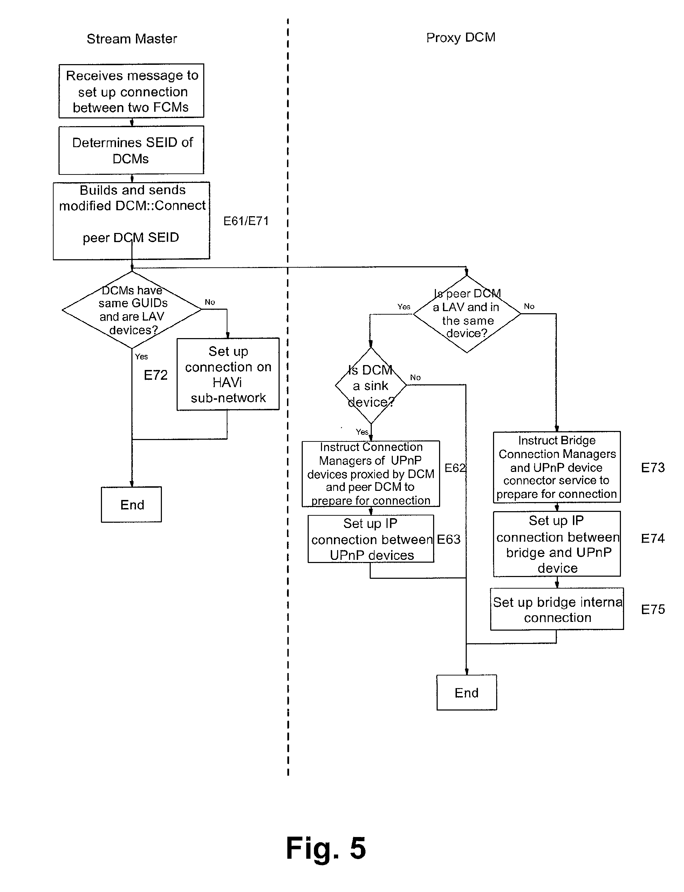

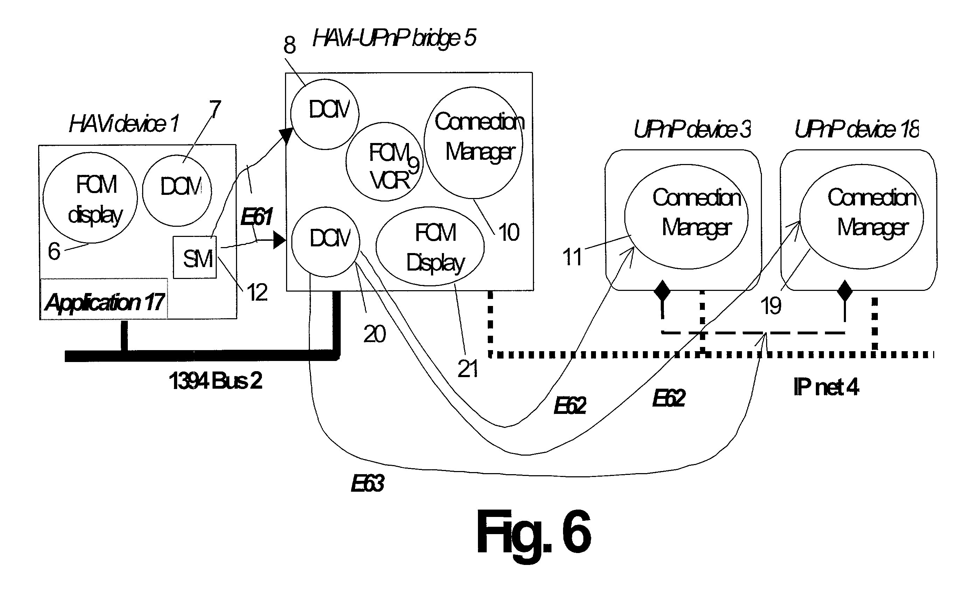

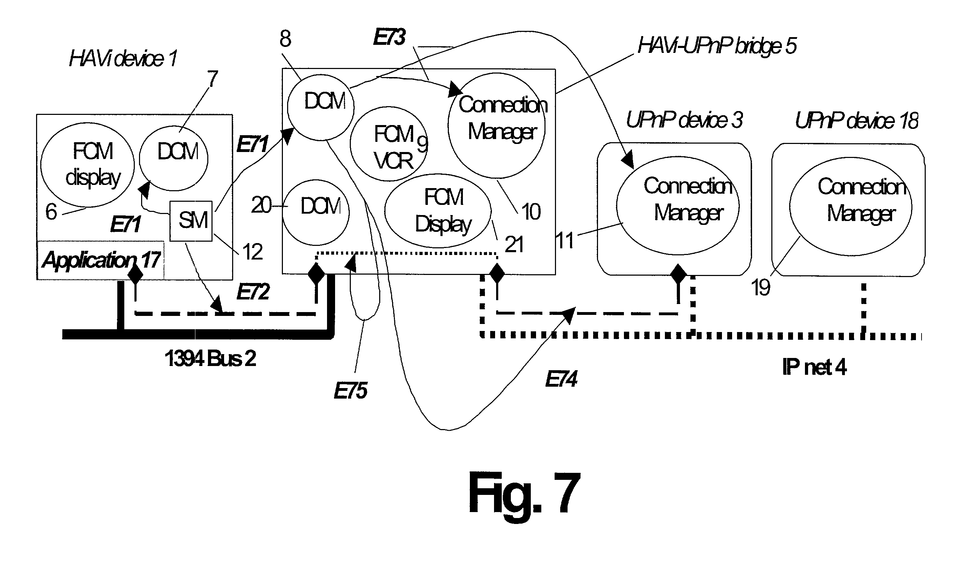

Stream establishment between two UPnP devices by a HAVi application is illustrated by figures 5 to 7. Figure 5 is a flowchart of the overall process carried out by the Stream Manager and the DCMs. Figures 6 and 7 are block diagrams of a network and respectively illustrating the case where a HAVI application establishes a connection between two UPnP devices and the case where the connection is established between a HAVi device and a UPnP device. References for the control by certain elements of other elements and of connections used in relation with figures 6 and 7 have been indicated also in figure 5, which presents the overall process.
In addition to the elements of figure 1, the network of figures 6 and 7 further comprises a second UPnP device 18, comprising a Connection Manager 19. This second UPnP device is represented by a proxy DCM 20 on the HAVi side of the bridge 5. UPnP device 18 is for example a display, and consequently a corresponding FCM 21 is created by the bridge. HAVi device 1 further comprises an application 17.

The case of figure 6 will be treated first. The differences with the case of figure 7 will then be indicated.
In the case of figures 6, the application 17 of device 1 - for example a user interface - calls the 'FlowTo' function of its Stream Manager (SM), which is the software element in HAVi in charge of establishing streams. The parameters of the FlowTo function call are identifiers of the plugs of the source and sink FCMs. This information is provided in data structures called 'FcmPlug'. The FCMs to be connected (in this case the proxy FCM of the UPnP device 3 and the proxy FCM representing the UPnP device 18) are identified using 'TargetID' data structures, which have already been mentioned. In the example of figure 6, the TargetlD of the source and sink plugs indicate the GUID identifier of the bridge. *
As an example, a connection is to be established from the source FCM 9 to the sink FCM 21.
The Stream Manager triggers the required internal plug connections at the level of the involved proxy DCMs and FCMs of the bridge, using 'DCM::Connect' function calls (these connections internal to the DCMs will not be described in more detail). The Stream Manager checks whether a connection on the HAVi network is to be made or not, by verifying whether the DCMs which it calls are of the legacy type (LAV) and whether they are in the same device (i.e. whether they have the same GUID). The Stream Manager does not establish connections between software elements within a same device: this is up to the device itself. In the present case (figure 6), no reservations on the HAVi network are required, so the Stream Manager does not make reservations of the IEEE 1394 isochronous resources and does not update the IEC 61883 plug control registers of the devices involved, steps it would take if a HAVi device were involved in the connection.
To avoid having the bridge (in the form of the proxy DCMs) establish a first connection between itself and UPnP device 18 and a second connection between itself and UPnP device 3, a called DCM (or another entity of the bridge to which this responsibility may be transferred) has to check whether both devices referred to in the DCM::Connect call it received are on the same side of the network or not. If this is the case, then a direct connection has to be established between the two devices on that one side, as shown in figure 6. Else, the DCM has to behave as shown in figure 7.
In the current version of the HAVi specification, the DCM::Connect function call does not contain enough information to enable the called DCM to determine whether the other DCM involved corresponds to a HAVi device or a UPnP device. This function call only contains addresses of source and destination plugs internal to the DCM (e.g. for a connection between the FCM and its DCM or between two FCMs inside the same DCM).
According to the present description, the Stream Manager transmits to a DCM information enabling it to determine whether it has to set up a connection or not, and in the affirmative, which devices are to be connected (i.e. either two UPnP devices or a UPnP device and the bridge).

According to a first embodiment, a new parameter is added to the DCM::Connect function call. The new parameter is:

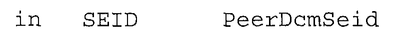

This parameter represents the SEID identifier (comprising the device's GUID identifier and a local handle) of the other DCM of the connection.
The proxy DCM receiving the function call (in step E61 of figure 6), for example proxy DCM 20, then proceeds as follows:
(a) It checks whether the other DCM (e.g. 8) corresponds to a UPnP device or not. According to the present embodiment, the bridge maintains a table listing the correspondence between the IP address and the SEID of each UPnP device, and the DCM checks whether the SEID it received in the DCM::Connect function call is present or not. In the affirmative, it knows that the other DCM is a proxy DCM, and that a connection is to be set up directly between two UPnP devices. According to a variant of the present embodiment, the proxy DCM receiving the DCM::Connect function call uses the received SEID to call the corresponding DCM using a DCM::GetDeviceClass function call. If the call returns the information that the other DCM is of the legacy type (LAV), then the proxy DCM knows that this other DCM is also a proxy of a UPnP device, if in addition this other DCM has also the same GUID identifier, i.e. that of the bridge in the present embodiment;
(b) If it has been determined that a connection needs to be set up between the two UPnP devices represented by the proxy DCM 20 having received the DCM::Connect function call and the proxy DCM 8 identified by the SEID - and this is the case for the example of figure 6 - then the DCM 20 which received the DCM::Connect function determines whether itself or the other proxy DCM is to set up the connection on the UPnP network. Indeed, both proxy DCMs 8 and 20 will have received a DCM::Connect function call from the Stream Manager. Only one should trigger the connection set-up on the UPnP network. According to the present embodiment, the proxy DCM representing the sink device carries out the set-up, by acting as UPnP User Control Point and sending appropriate messages (i.e. 'PrepareForConnection') to the Connection Managers 11 and 19 of devices 3 and 18 respectively (step E62 of figure 6). The User Control Point also sets up the IP connection (step E63 of figure 6).

By recognizing that the connection is set up between two UPnP devices, the DCMs 8 and 20 also recognize that no connection is required between a plug on the HAVi interface of the bridge and a plug on the UPnP interface.

Figure 7 illustrates the case where the connection between devices crosses the bridge. For example, a connection is to be established between the DCM 7 of the HAVI device 1 and the UPnP device 3. The checks made by the Stream Manager and the DCMs remain the same as above. Stream Manager sends DCM::Connect calls to DCM 7 and DCM 8, representing the UPnP device 3 (step E71). The Stream Manager determines that a connection is required in the HAVi network between device 1 and the bridge and sets up this connection (step E72). DCM 8 determines that the DCM 7 is not a proxy DCM having the same GUID as itself, so it instructs the Connection Managers 10 and 11 to prepare for a connection using 'PrepareForConnection' messages (step E73), establishes the IP connection (step E74) and the connection internal to the bridge (step E75).

According to a second embodiment of the invention, a new function is created in the Application Programmable Interface of the HAVi DCMs, in order to transmit certain information from the Stream Manager to the DCMs. This new function is used by the Stream Manager in the case where the connection to be established between two devices on a remote sub-network, such as the UPnP sub-network. According to this second embodiment, this function is distinct from the DCM::Connect function, which remains as defined by HAVi. The Stream Manager determines whether the connection is a cross-bridge connection or a pure sub-network connection, and sends an appropriate function call to the DCMs.
According to this second embodiment, the new function has the following format: 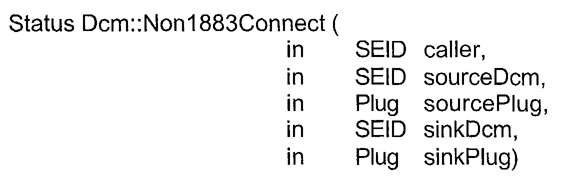 The sourceDcm and sinkDcm parameters represent the SEIDs of the source and sink DCMs.

The sourcePlug and sinkPlug parameters are the DCM plugs of the source and sink devices. The call is to be sent to the source and sink DCMs by the Stream Manager. The sink DCM will be in charge of setting up the UPnP connection. The Stream Manager analyzes the DCMs/FCMs involved in the connection to determine whether a connection is required on the HAVi sub-network or not, this not being the case as before when the DCMs are of the LAV type and have same GUID. A sink proxy DCM receiving a Dcm::Connect function call knows that it has to set up the stream between the bridge device and the UPnP device. If it receives a Dcm::Non1883Connect function call, it knows that it has not to set up the UPnP stream between the UPnP device and the bridge, but between the two UPnP devices. A source proxy DCM receiving a Dcm::Connect knows that it has to setup the stream between the UPnP device and the bridge device. If it receives the Dcm::Non1883Connect, it knows that it has nothing to do but update the status of its plugs.

According to this second embodiment is that less burden is placed on the DCMs concerning decision taking, since by issuing different function calls depending on the task to be performed, the Stream Manager centralizes some of this decision making.

According to a third embodiment of the invention, the Stream Manager does not transmit to a proxy DCM information concerning the peer DCM of a connection to be established. The proxy DCM itself requests that information, as follows:
(a) When the proxy DCM receives a Dcm::Connect function call as defined by the HAVi specification, it positively acknowledges this call, although it does not carry out any of the steps required to set up the requested connection.
(b) The proxy DCM waits for the Stream Manager to issue a message indicating that the connection has been created ('connection added' event). Information concerning this connection, including the identity of the peer DCM, will then be available at the Stream Manager.
(c) The proxy DCM requests information concerning the connection using the 'SM::GetConnection' function call as defined by the HAVi specification.
(d) The proxy DCM checks whether the peer DCM is a LAV of the bridge, and then acts as above to set up either a connection between UPnP devices (if it is the sink DCM) or a connection between the bridge and a UPnP device.

The first two embodiments are preferred over the third one, because the Stream Manager is made to believe that a connection has been established, although this is not true.

Although the embodiments have been described in relation with a bridge between a HAVi network and a UPnP network, the processes described can be used just as well to establish connections between LAV type devices hosted by a same HAVi device. This host device serves as a 'bridge' between the HAVi network and the network of devices represented by legacy type DCMs (which may comprise a single legacy device).

Moreover, the invention applies also to the establishment of connections when more than two sub-networks are connected to a same bridge. The same API amendments described above can be applied in such a case. The bridge device contains data which indicates for each proxy DCM SEID the sub-network to which it belongs, and the address of the proxied device on the sub-network. For example, the third sub-network may be of the PLC (Power Line Control) type. A HAVi Stream Manager may then establish a connection between e.g. a PLC device and a UPnP device, across the bridge, or between two devices on any of the sub-networks. Other combinations are of course also possible.

What has been described above concerns the problem appearing when a HAVi Stream Manager tries to establish a connection between two UPnP devices. On the other hand, when a UPnP device establishes a connection between two HAVi devices, this problem does not appear.

When a connection crossing the bridge is initiated by a UPnP device, the following steps are taken: a Control Point (UPnP controller) invokes the 'ConnectionManager::PrepareForConnection' command on both source and sink to establish a connection. This command is sent to the UPnP device and to the bridge device. When the bridge device receives such a command, it makes a FlowTo call to its Stream Manager to establish a 61883 connection between the target device and the proxy DCM representing the involved UPnP device (this proxy DCM has a Targetld with the GUID of the bridge device). On the IP side, the protocol will be IP based (http, rtsp, etc), and on the HAVi side it will be IEC61883 based.
This method can also be applied to a stream established on the HAVi side by a UPnP application. The Connection Managers will both be on the bridge device. The CM::PrepareForConnection function comprises a parameter called PeerConnectionManager, identifying the peer Connection Manager of the connection to be established and indicating to each Connection Manager whether the stream crosses the bridge or not, and what parameters to put in the FlowTo call (the bridge FcmPlug or another HAVi FcmPlug).
UPnP specifies for IEC61883 based streams (which is the case when the specified protocol is HAVi or IEC61883) that the sink device is responsible for the connection. So the Connection Manager of the sink proxy will be in charge of the IEEE 1394 connection if the stream is purely one the IEEE1394 network. Moreover, the Connection Manager of the proxy (sink or source) will be in charge of the IEEE 1394 side of the stream if the stream crosses the bridge.
DCM::Connection ManagerConnection ManagerConnection ManagerConnection ManagerDCM::Connection ManagerConnection Manager

## Claims

1. Method for establishing a connection between a first and a second device in a network comprising a bridge device (5) connecting a first sub-network (2) of the HAVi type to a second sub-network (4),
**characterized in that** it comprises the steps, at the level of a device control module (8, 20) of the first device hosted by the bridge device, of:
(a) receiving, from a HAVi stream manager (12), data permitting identification of a peer device control module of the second device;
(b) determining whether the device control module and the peer device control module are of the legacy type and have a same device identifier; and
(c) in the negative, deducing that the first (3) and second devices (1) are on different sub-networks (2, 4);
(d) in the affirmative, deducing that the first and second devices (3, 18) are on the second sub-network (4).

2. Method according to claim 1, wherein step (c) further comprises the steps (E73, E74, E75) of establishing a connection between the first device (3) and the bridge device (5).

3. Method according to claim 1 or 2, wherein step (d) further comprises the steps (E62, 63) of establishing a connection between the first device (3) and the second device (18) on the second sub-network (4).

4. Method according to claim 3, further comprising, within step (d), the step of determining whether the device control module or the peer device control module is to carry out the connection of step (d).

5. Method according to claim 4, wherein the connection of step (d) is established by the entity among the device control module or the peer device control module which represents a sink device of the connection.

6. Method according to one of the claims 1 to 5, wherein the second sub-network (4) is of the UPnP type and wherein step (c) comprises:
- the step (E73) of instructing Connection Managers (10, 11) of the bridge device and the UPnP device (3) represented by the device control module to prepare for connection;
- the step (E74) of setting up a connection on the UPnP sub-network between the bridge device (5) and said UPnP device (3); and
- the step of configuring an internal connection of the bridge device to link the connection on the UPnP sub-network with a connection on the HAVi sub-network.

7. Method according to one of the claims 1 to 6, wherein the second sub-network (4) is of the UPnP type and wherein step (d) comprises:
- the step (E62) of instructing Connection Managers (11, 19) of the UPnP devices represented by the device control module and the peer device control module to prepare for connection; and
- the step (E63) of establishing a connection on the UPnP sub-network of the two UPnP devices (3, 18).

8. Method according to one of the claims 1 to 7, wherein said data received from the stream manager comprises a SEID identifier of the peer device control module.

9. Method for establishing a connection between a first and a second device by a HAVi Stream Manager, **characterized in that** it comprises the steps of:
(a) determining identifiers of device control modules of the first and second devices;
(b) inserting said identifiers into a message for instructing a device control module to perform internal connections.

10. Method according to claim 9, wherein said message is 'Dcm::Connect'.

11. Method according to one of the claims 9 or 10, further comprising the step of
- checking whether the device control modules are of the legacy type and have a same device identifier, and only in the negative reserving connection resources on the HAVi network.

12. Method according to claim 9, further comprising a step (c) of checking whether the device control modules are of the legacy type and have a same device identifier, and wherein, in the affirmative the message instructs the device control modules to establish a non-HAVi connection, and in the negative the message instructs the device control modules to establish a connection between a device on the HAVi network and a legacy device.

13. Method for establishing a connection between a first and a second device in a network comprising a bridge device (5) connecting a first sub-network (2) of the HAVi type to a second sub-network (4),
**characterized in that** it comprises the steps, at the level of a device control module (8, 20) of the first device hosted by the bridge device, of:
(c) receiving, from a HAVi stream manager (12), data indicating whether the first (3) and second devices (1) are on different sub-networks (2, 4) or whether the first and second devices (3, 18) are on the second sub-network (4); and
(d) configuring connections on the second sub-network and on the bridge device as a function of said data.
